# EUROPEAN PATENT APPLICATION

(11) **EP 4 755 771 A2**
(43) Date of publication of application: **10.06.2026**
(21) Application number: 26174038.5
(22) Date of filing: 22.10.2021
(51) Int. Cl.: B62H 3/00

(54) **SYSTEM AND METHOD FOR RECHARGING AN ELECTRIC VEHICLE**

(30) Priority: 23.10.2020 US 202063104881 P
(62) Divisional of application: 21881420.0
(71) Applicant: PBSC Solutions Urbaines Inc., Longueuil, Québec J4G 2H9 (CA)
(72) Inventor: LÉVESQUE, Daniel, QUEBEC, J5R 4T7 (CA)
(74) Representative: Santarelli

(57) **Abstract**

The present application concerns a vehicle (104) including a battery, a vehicle component management system, and a vehicle connector assembly (300) integrated with the vehicle (104). The vehicle connector assembly (300) is arranged to engage a docking connector assembly (200) of a vehicle-docking station (120) connected to a power source. The vehicle connector assembly (300) includes a battery-charging interface for charging the battery through the docking connector assembly (200), and a vehicle communication system The vehicle communication system includes a vehicle communication interface a connector assembly communication interface, and a controller configured to convert between a connector-vehicle communication protocol and a different dock-connector communication protocol, in both directions, so as to enable data transmission between the vehicle (104) and the docking connector assembly (200). The vehicle connector assembly and docking connector assembly are engageable in a secured and locked configuration.

## Description

### PRIOR APPLICATION

The present application claims priority from U.S. provisional patent application No. 63/104.881, filed on October 23, 2020, and entitled "SYSTEM AND METHOD FOR SECURING AND RECHARGING AN ELECTRIC VEHICLE".

### TECHNICAL FIELD

The present disclosure generally relates to systems and methods for securing and recharging an electric vehicle and more particularly to systems and methods in which mateable connector assemblies provide securing of an electric vehicle to a vehicle-docking station while also enabling recharging of the electric vehicle.

### BACKGROUND

Being able to secure and selectively lock a vehicle to a vehicle-docking frame or station is useful in various applications. For example, various vehicle-sharing systems use vehicle rack systems each having a plurality of docking stations. The vehicle rack systems are distributed geographically. A user can rent a vehicle by removing the vehicle from a first docking station, ride the vehicle to another geographical area where a second docking station is located and return the vehicle by docking the vehicle to the second docking station.

Electric vehicles, such as electrically assisted bicycles, electric scooters and the like, are becoming more and more common in vehicle-sharing systems. However, these types of vehicles usually require specific docking stations, such as docking stations with battery-charging capability. Incompatibility issues might occur between the docking stations and the vehicles relative to the exchange of information to ensure the charging thereof.

In view of the above, there is a need for a vehicle locking and battery-charging system which would be able to overcome or at least minimize some of the above-discussed prior art concerns, and for a corresponding method.

### BRIEF SUMMARY

It is therefore an aim of the present invention to address the above-mentioned issues.

According to the present invention, there is provided a vehicle according to claim 1.

According to a general aspect disclosed herein, there is provided a vehicle connector assembly mountable to or formed integral with an electric vehicle comprising a vehicle component management system and a battery electrically couplable with the vehicle connector assembly, the vehicle connector assembly being engageable with a docking connector assembly electrically coupled with a power source and comprising a docking communication system, wherein the vehicle connector assembly comprises: a battery-charging interface electrically couplable with the power source via the docking connector assembly to charge the battery of the electric vehicle; and a vehicle communication system to receive vehicle information from the vehicle component management system of the electric vehicle and send said vehicle information to the docking communication system, the vehicle communication system using a connector-vehicle communication protocol to receive the vehicle information from the vehicle component management system and wherein the docking communication system uses a dock-connector communication protocol to receive the vehicle information from the vehicle communication system, the dock-connector communication protocol being different from the connector vehicle communication protocol; wherein the vehicle connector assembly is configurable into a charging configuration when engaged with the docking connector assembly, wherein a charging current of the power source is provided to the battery of the electric vehicle based on the vehicle information received by the docking communication system.

The vehicle connector assembly may be configured to cooperate with the docking connector assembly in such a manner as to define a locked configuration. In this context, the vehicle connector assembly may be arranged to assume a charging configuration when the vehicle connector assembly and the docking connector assembly are together in the locked configuration.

The vehicle connector assembly may comprise a connector assembly communication interface capable of communicating with a dock communication interface forming part of the docking communication system.

The connector assembly communication interface may comprise a Radio Frequency Identification (RFID) interface arranged to exchange data wirelessly with a corresponding RFID interface provided in the dock communication interface.

Communication between the connector assembly communication interface and the dock communication interface may be performed using the dock-connector communication protocol.

The vehicle communication system may further comprise a vehicle communication interface configured to communicate with the vehicle component management system using the connector-vehicle communication protocol.

The vehicle communication interface may comprise a wired connection to a data bus associated with the electric vehicle.

The vehicle communication system may comprise a controller operatively coupled to the vehicle communication interface and to the connector assembly communication interface. The controller may be arranged to convert the connector-vehicle communication protocol into the dock-connector communication protocol, and vice versa, so as to permit transmission of data between the electric vehicle and the docking connector assembly.

The controller may be configured to operate the vehicle communication interface for communication with the electric vehicle using a first interface type, and to operate the connector assembly communication interface for communication with the docking connector assembly using a second interface type different from the first interface type.

The electric vehicle may comprise a battery management system, and the controller may be configured to relay data from the battery management system to the docking connector assembly, for example to initiate charging of the battery and/or to monitor the charging status of the battery.

The vehicle communication system may comprise a serial transceiver for communication with a data bus associated with the electric vehicle.

The serial transceiver may comprise a Controller Area Network (CAN) bus transceiver for communication with a CAN bus onboard the electric vehicle.

The serial transceiver may comprise a Universal Asynchronous Receiver/Transmitter (UART).

The serial transceiver may be bidirectional so as to permit data exchange in both directions.

The battery-charging interface may comprise a unidirectional current-conducting member providing battery power feedback protection.

The unidirectional current-conducting member may comprise an ideal diode circuitry.

The vehicle connector assembly may comprise a computer-readable medium associated with the electric vehicle, and the docking communication system may be configured to read vehicle information from that computer-readable medium.

The computer-readable medium may comprise an identification tag.

The identification tag may comprise an RFID tag.

The vehicle information may comprise one or more battery-related parameters, such as actual battery voltage, actual battery state of charge, actual battery temperature, an end-of-charge voltage setpoint, and/or a battery charge current setpoint.

According to another general aspect disclosed herein, there is provided a battery-charging system, comprising: a docking connector assembly mountable to or formed integral with a vehicle-docking station electrically coupled with a power source, the docking connector assembly being electrically couplable with the power source and comprising a docking communication system; a vehicle connector assembly mountable to or formed integral with an electric vehicle comprising a vehicle component management system and a battery electrically couplable with the vehicle connector assembly, the vehicle connector assembly and the docking connector assembly being engageable with each other, the vehicle connector assembly comprising: a battery-charging interface electrically couplable with the power source via the docking connector assembly to charge the battery of the electric vehicle; and a vehicle communication system to receive vehicle information from the vehicle component management system of the electric vehicle and send said vehicle information to the docking communication system; wherein the vehicle communication system uses a connector-vehicle communication protocol to receive the vehicle information from the vehicle component management system; and wherein the docking communication system uses a dock-connector communication protocol to receive the vehicle information from the vehicle communication system, the dock-connector communication protocol being different from the connector-vehicle communication protocol; wherein the locking and battery-charging system is configurable into a charging configuration when the docking and vehicle connector assemblies are engaged with each other, wherein a charging current of the power source is provided to the battery of the electric vehicle based on the vehicle information received by the docking communication system.

According to another general aspect disclosed herein, there is provided a battery-charging system, comprising: a docking connector assembly mountable to or formed integral with a vehicle-docking station electrically coupled with a power source, the docking connector assembly being electrically couplable with the power source and comprising a docking communication system; a vehicle connector assembly mountable to or formed integral with an electric vehicle comprising a vehicle component management system and a battery electrically couplable with the vehicle connector assembly, the vehicle connector assembly and the docking connector assembly being engageable with each other, the vehicle connector assembly comprising: a battery-charging interface electrically couplable with the power source via the docking connector assembly to charge the battery of the electric vehicle; and a vehicle communication system to receive vehicle information from the vehicle component management system of the electric vehicle and send said vehicle information to the docking communication system; wherein the vehicle communication system uses a connector-vehicle communication protocol to receive the vehicle information from the vehicle component management system; and wherein the docking communication system uses a dock-connector communication protocol to receive the vehicle information from the vehicle communication system, the dock-connector communication protocol being different from the connector-vehicle communication protocol; wherein the battery-charging system is configurable into a charging configuration when the docking and vehicle connector assemblies are engaged with each other, wherein a charging current of the power source is provided to the battery of the electric vehicle based on the vehicle information received by the docking communication system.

The vehicle connector assembly and the docking connector assembly may be arranged to cooperate so as to define a locked configuration. The battery-charging system may be arranged to assume a charging configuration when the vehicle connector assembly and the docking connector assembly are together in the locked configuration.

The docking communication system may comprise a dock communication interface capable of communicating with a corresponding connector assembly communication interface provided on the vehicle connector assembly.

The dock communication interface may comprise a Radio Frequency Identification (RFID) interface arranged to exchange data wirelessly with a corresponding RFID interface provided in the connector assembly communication interface.

The dock communication interface and the connector assembly communication interface may be configured to communicate using the dock-connector communication protocol.

The vehicle communication system may comprise a vehicle communication interface for communicating with the vehicle component management system using the connector-vehicle communication protocol.

The vehicle communication interface may comprise a wired connection to a data bus associated with the electric vehicle.

The vehicle communication system may comprise a controller operatively coupled to the vehicle communication interface and to the connector assembly communication interface. The controller may be arranged to convert the connector-vehicle communication protocol into the dock-connector communication protocol, and vice versa, so as to allow transmission of data between the electric vehicle and the vehicle-docking station.

The controller may be configured to operate the vehicle communication interface for communication with the electric vehicle using a first interface type, and to operate the connector assembly communication interface for communication with the vehicle-docking station using a second interface type different from the first interface type.

The electric vehicle may comprise a battery management system, and the controller may be configured to relay data from the battery management system to the docking connector assembly, for example to initiate charging of the battery and/or to monitor the charging status of the battery.

The vehicle communication system may comprise a serial transceiver for communication with a data bus associated with the electric vehicle.

The serial transceiver may comprise a Controller Area Network (CAN) bus transceiver for communication with a CAN bus onboard the electric vehicle.

The serial transceiver may comprise a Universal Asynchronous Receiver/Transmitter (UART).

The serial transceiver may be bidirectional so as to permit data exchange in both directions.

The battery-charging interface may comprise a unidirectional current-conducting member providing battery power feedback protection.

The unidirectional current-conducting member may comprise an ideal diode circuitry.

The docking connector assembly may comprise a proximity detector arranged to detect when the electric vehicle is in the vicinity of the vehicle-docking station.

The proximity detector may comprise a reed switch, while the electric vehicle may comprise a magnetic element. The reed switch may thus be actuated by the magnetic element in order to detect when the electric vehicle is in the vicinity of the vehicle-docking station.

The vehicle connector assembly may comprise a computer-readable medium associated with the vehicle, and the docking communication system may be configured to read vehicle information from the computer-readable medium.

The computer-readable medium may comprise an identification tag.

The identification tag may comprise an RFID tag.

The vehicle information may comprise one or more battery-related parameters, such as actual battery voltage, actual battery state of charge, actual battery temperature, an end-of-charge voltage setpoint, and/or a battery charge current setpoint
According to another general aspect, there is provided a vehicle connector assembly mountable to or formed integral with an electric vehicle comprising a vehicle component management system and a battery electrically couplable with the vehicle connector assembly, the vehicle connector assembly being configurable into a locked configuration with a docking connector assembly electrically coupled with a power source and comprising a docking communication system, wherein the vehicle connector assembly comprises: a battery-charging interface electrically couplable with the power source via the docking connector assembly to charge the battery of the electric vehicle; and a vehicle communication system to receive vehicle information from the vehicle component management system of the electric vehicle and send said vehicle information to the docking communication system, the vehicle communication system using a connector-vehicle communication protocol to receive the vehicle information from the vehicle component management system and wherein the docking communication system uses a dock-connector communication protocol to receive the vehicle information from the vehicle communication system; wherein the vehicle connector assembly is configurable into a charging configuration when in the locked configuration with the docking connector assembly, wherein a charging current of the power source is provided to the battery of the electric vehicle based on the vehicle information received by the docking communication system.

The dock-connector communication protocol may be different from the connector-vehicle communication protocol.

The vehicle connector assembly may comprise a connector assembly communication interface capable of communicating with a dock communication interface forming part of the docking communication system.

The vehicle communication system may comprise a vehicle communication interface for communicating with the vehicle component management system using the connector-vehicle communication protocol.

The vehicle communication system may comprise a controller operatively coupled to the vehicle communication interface and to the connector assembly communication interface. The controller may be arranged to convert the connector-vehicle communication protocol into the dock-connector communication protocol, and vice versa, so as to allow transmission of data between the electric vehicle and the docking connector assembly.

The vehicle communication system may comprise a serial transceiver for communication with a data bus associated with the electric vehicle.

According to another general aspect disclosed herein, there is provided a locking and battery-charging system, comprising: a docking connector assembly mountable to or formed integral with a vehicle-docking station electrically coupled with a power source, the docking connector assembly being electrically couplable with the power source and comprising a docking communication system; a vehicle connector assembly mountable to or formed integral with an electric vehicle comprising a vehicle component management system and a battery electrically couplable with the vehicle connector assembly, the vehicle connector assembly and the docking connector assembly being configurable together in a locked configuration, the vehicle connector assembly comprising: a battery-charging interface electrically couplable with the power source via the docking connector assembly to charge the battery of the electric vehicle; and a vehicle communication system to receive vehicle information from the vehicle component management system of the electric vehicle and send said vehicle information to the docking communication system; wherein the vehicle communication system uses a connector-vehicle communication protocol to receive the vehicle information from the vehicle component management system; and wherein the docking communication system uses a dock-connector communication protocol to receive the vehicle information from the vehicle communication system; wherein the battery-charging system is configurable into a charging configuration when the docking and vehicle connector assemblies are configured in the locked configuration, wherein a charging current of the power source is provided to the battery of the electric vehicle based on the vehicle information received by the docking communication system.

The dock-connector communication protocol may be different from the connector-vehicle communication protocol.

The vehicle connector assembly may comprise a connector assembly communication interface capable of communicating with a dock communication interface forming part of the docking communication system.

The vehicle communication system may comprise a vehicle communication interface for communicating with the vehicle component management system using the connector-vehicle communication protocol.

The vehicle communication system may comprise a controller operatively coupled to the vehicle communication interface and to the connector assembly communication interface. The controller may be arranged to convert the connector-vehicle communication protocol into the dock-connector communication protocol, and vice versa, so as to allow transmission of data between the electric vehicle and the docking connector assembly.

The vehicle communication system may comprise a serial transceiver for communication with a data bus associated with the electric vehicle.

According to another general aspect disclosed herein, there is provided a vehicle rack system electrically coupled with a power source, the vehicle rack system comprising: at least one electric vehicle comprising: a battery; a vehicle component management system; and a vehicle connector assembly comprising: a battery-charging interface electrically coupled with the battery; and a vehicle communication system to receive vehicle information from the vehicle component management system of said at least one electric vehicle; at least one vehicle docking station comprising a docking connector assembly having: a vehicle-charging module operable to receive electrical power from the power source and to selectively provide an electric current of the power source to said at least one electric vehicle docked therewith via the battery-charging interface thereof when the docking connector assembly and the vehicle connector assembly are engaged with each other; a docking communication system operable to receive said vehicle information from the vehicle communication system when said vehicle connector assembly of said at least one electric vehicle and the docking connector assembly are engaged with each other; and a charging controller operatively coupled with the docking communication system and configured for selectively providing said electric current to said at least one electric vehicle docked therewith based on the vehicle information; wherein the vehicle communication system uses a connector-vehicle communication protocol to receive the vehicle information from the vehicle component management system; and wherein the docking communication system uses a dock-connector communication protocol to receive the vehicle information from the vehicle communication system, the dock-connector communication protocol being different from the connector-vehicle communication protocol.

According to another general aspect disclosed herein, there is provided a method for charging an electric vehicle engaged with a vehicle-docking station, the electric vehicle comprising a battery, a vehicle component management system and a vehicle connector assembly comprising a battery-charging interface electrically coupled with the battery and a vehicle communication system to receive vehicle information from the vehicle component management system of the electric vehicle, wherein the vehicle-docking station comprises a docking connector assembly having a docking communication system and a vehicle-charging module operable to receive electrical power from a power source, the method comprising: engaging the electric vehicle with the vehicle-docking station; connecting the docking connector assembly and the vehicle connector assembly together; sending the vehicle information to the docking communication system via the vehicle communication system using a connector-vehicle communication protocol to receive the vehicle information from the vehicle component management system and via the docking communication system using a dock-connector communication protocol to receive the vehicle information from the vehicle communication system, the dock-connector communication protocol being different from the connector-vehicle communication protocol; comparing the vehicle information to predetermined vehicle charging conditions via a charging controller of the docking connector assembly; and if the vehicle information corresponds to the predetermined vehicle charging conditions, electrically coupling the vehicle-charging module of the docking connector assembly with the battery-charging interface of the vehicle connector assembly to charge the battery of the electric vehicle.

Charging of the battery of the electric vehicle, upon electrical coupling of the vehicle-charging module of the docking connector assembly with the battery-charging interface of the vehicle connector assembly, may be performed according to charging parameters based on the vehicle information.

According to a general aspect disclosed herein, there is provided a locking and battery-charging system, comprising: a docking connector assembly mountable to a vehicle-docking station electrically coupled to a power source, the docking connector assembly comprising a docking communication system; a vehicle connector assembly mountable to an electric vehicle comprising a battery and electrically couplable therewith, the vehicle connector assembly being configurable in a locked configuration with the docking connector assembly, the vehicle connector assembly comprising: a battery-charging interface electrically couplable to the power source via the docking connector assembly to charge the battery of the vehicle; and a vehicle communication system to receive vehicle information from the electric vehicle and send said vehicle information to the docking communication system; wherein the locking and battery-charging system is configurable into a charging configuration when the docking and vehicle connector assemblies are configured in the locked configuration, wherein a charging current of the power source is provided to the vehicle connector assembly based on the vehicle information received by the docking communication system.

According to another general aspect disclosed herein, there is provided a vehicle rack system comprising: one or more electric vehicles, at least one of said one or more electric vehicles comprising: a battery; and a vehicle connector assembly comprising: a battery-charging interface electrically coupled to the battery; and a vehicle communication system to receive vehicle information from said at least one of said one or more electric vehicles; one or more vehicle-docking stations, at least one of said one or more vehicle-docking stations comprising a docking connector assembly having: a vehicle-charging module operable to receive electrical power from a power source and to selectively provide an electric current of the power source to said one of said one or more electric vehicles docked therewith via the battery-charging interface thereof when the docking connector assembly and the vehicle connector assembly are configured in a locked configuration; a docking communication system operable to receive said vehicle information from the vehicle communication system when said vehicle connector assembly of said one of the electric vehicles is connected to the docking connector assembly; and a charging controller configured for selectively providing said electric current to said one of the electric vehicles docked therewith based on the vehicle information.

According to another general aspect disclosed herein, there is provided a method for securing and charging an electric vehicle comprising a battery and a vehicle connector assembly comprising a battery-charging interface electrically coupled to the battery and a vehicle communication system to receive vehicle information from the electric vehicle, the method comprising: providing a vehicle-docking station comprising a docking connector assembly having: a vehicle-charging module operable to receive electrical power from a power source; and a docking communication system; engaging the electric vehicle with the vehicle-docking station; configuring the docking connector assembly and the vehicle connector assembly in a locked configuration; sending the vehicle information to the docking communication system via the vehicle communication system; comparing the vehicle information to predetermined vehicle charging conditions; and if the vehicle information correspond to the predetermined vehicle charging conditions, charging the battery via the vehicle-charging module electrically connected to the battery-charging interface.

### BRIEF DESCRIPTION OF THE DRAWINGS

Fig. 1 is a rear perspective view of a vehicle-docking station and a vehicle about to be engaged with the vehicle-docking station, the vehicle-docking station and the vehicle comprising respectively a docking connector assembly and a vehicle connector assembly of a battery-charging vehicle system in accordance with an embodiment;
Fig. 2 is a rear perspective view of a vehicle rack system comprising a plurality of vehicle-docking stations and a plurality of vehicles of Fig. 1, the vehicles being engaged with a corresponding one of the plurality of vehicle-docking stations;

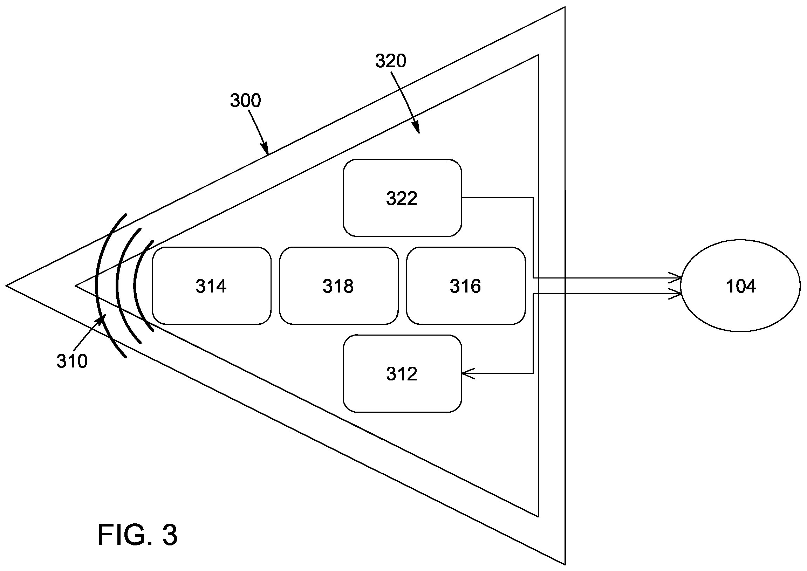

Fig. 3 is a schematic representation of the vehicle connector assembly of the battery-charging vehicle system in accordance with an embodiment;
Fig. 4 is a block diagram representing the different steps of a method for charging an electric vehicle; and
Figs. 5A and 5B are diagrams summarizing an example of operation of the battery-charging system of Fig. 1.

### DETAILED DESCRIPTION

In the following description, the same numerical references refer to similar elements. Furthermore, for the sake of simplicity and clarity, namely so as to not unduly burden the figures with several references numbers, not all figures contain references to all the components and features, and references to some components and features may be found in only one figure, and components and features of the present disclosure which are illustrated in other figures can be easily inferred therefrom. The embodiments, geometrical configurations, materials mentioned and/or dimensions shown in the figures are optional and are given for exemplification purposes only.

Moreover, it will be appreciated that positional descriptions such as "above", "below", "forward", "rearward", "left", "right" and the like should, unless otherwise indicated, be taken in the context of the figures only and should not be considered limiting. Moreover, the figures are meant to be illustrative of certain characteristics of the locking and battery-charging system and the vehicle rack system and are not necessarily to scale. To provide a more concise description, some of the quantitative expressions given herein may be qualified with the term "about". It is understood that whether the term "about" is used explicitly or not, every quantity given herein is meant to refer to an actual given value, and it is also meant to refer to the approximation to such given value that would reasonably be inferred based on the ordinary skill in the art, including approximations due to the experimental and/or measurement conditions for such given value.

In the following description, an embodiment is an example or implementation. The various appearances of "one embodiment", "an embodiment" or "some embodiments" do not necessarily all refer to the same embodiments. Although various features may be described in the context of a single embodiment, the features may also be provided separately or in any suitable combination. Conversely, although the invention may be described herein in the context of separate embodiments for clarity, it may also be implemented in a single embodiment. Reference in the specification to "some embodiments", "an embodiment", "one embodiment" or "other embodiments" means that a particular feature, structure, or characteristic described in connection with the embodiments is included in at least some embodiments, but not necessarily all embodiments. It is to be understood that the phraseology and terminology employed herein is not to be construed as limiting and are for descriptive purpose only. The principles and uses of the teachings of the present disclosure may be better understood with reference to the accompanying description, figures and examples. It is to be understood that the details set forth herein do not construe a limitation to an application of the disclosure.

Furthermore, it is to be understood that the disclosure can be carried out or practiced in various ways and that the disclosure can be implemented in embodiments other than the ones outlined in the description above. It is to be understood that the terms "including", "comprising", and grammatical variants thereof do not preclude the addition of one or more components, features, steps, or integers or groups thereof and that the terms are to be construed as specifying components, features, steps or integers. If the specification or claims refer to "an additional" element, that does not preclude there being more than one of the additional element. It is to be understood that where the claims or specification refer to "a" or "an" element, such reference should not be understood as meaning that there is only one of that element. It is to be understood that where the specification states that a component, feature, structure, or characteristic "may", "might", "can" or "could" be included, that particular component, feature, structure, or characteristic is not required to be included. The descriptions, examples, methods and materials presented in the claims and the specification are not to be construed as limiting but rather as illustrative only. Meanings of technical and scientific terms used herein are to be commonly understood as by one of ordinary skill in the art to which the invention belongs, unless otherwise defined. It will be appreciated that the methods described herein may be performed in the described order, or in any suitable order.

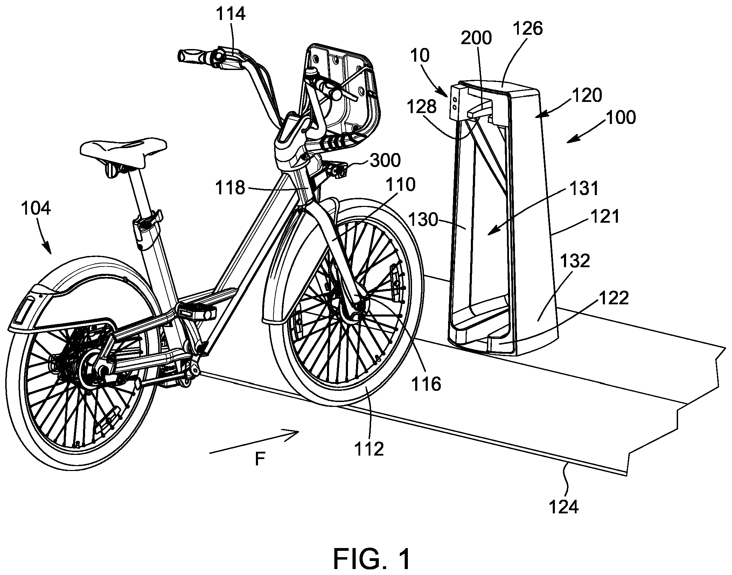

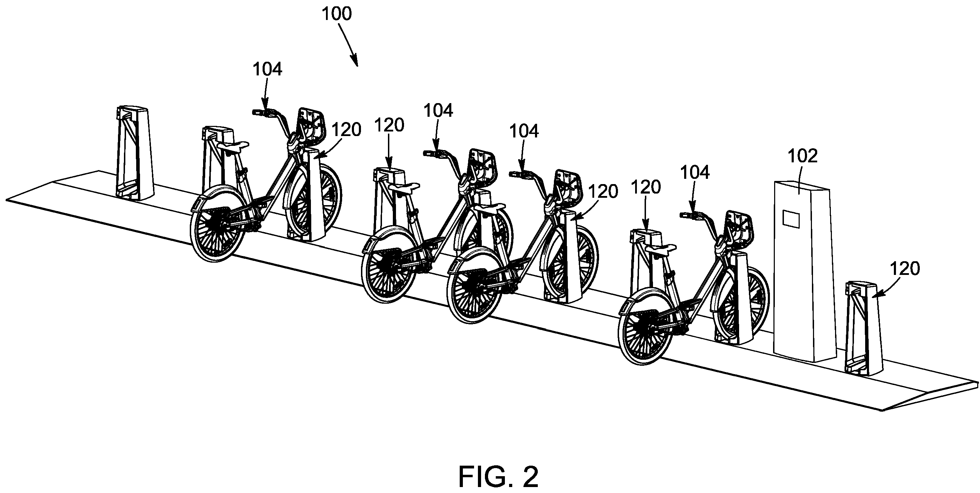

Referring now to the drawings, and more particularly to Figs. 1 and 2, there is shown a vehicle rack system 100 having one or more vehicle-docking stations 120 (or charging-enabled docking stations 120 or vehicle-receiving stations 120 or vehicle-charging stations 120) and one or more vehicles 104 (for instance a bicycle 104, in the embodiment shown) engageable with one of the vehicle-docking stations 120 of the vehicle rack system 100. A possible embodiment of a vehicle-docking station is disclosed in U.S. patent no. 8,061,499, which is hereby incorporated by reference in its entirety.

The vehicle rack system 100 includes one or more locking and battery-charging systems 10 mounted at least partially to the vehicle-docking stations 120. In the embodiment shown, the locking and battery-charging system 10 (or locking system or electronic lock 10) comprises first and second complementary cooperating connector members, each being mounted to or formed integral with a respective one of the vehicle 104 and the vehicle-docking station 120. In the illustrated embodiment, the first connector member comprises a docking connector assembly - or female connector assembly - 200 mounted to or formed integral with the vehicle rack system 100 (the vehicle-docking station 120) and the second connector member comprises a corresponding complementary vehicle connector assembly - or male connector assembly - 300 mounted to or formed integral with the vehicle 104. It is understood that the docking connector assembly could alternatively be of the male type, whereas the vehicle connector assembly could be of the female type.

The vehicle connector assembly 300 and the docking connector assembly 200 which form together the locking and battery-charging system 10 are engageable together (i.e. mechanically couplable, i.e. mateable) in a secured and locked position (or secured and locked configuration, or locked configuration). In other words, when the vehicle connector assembly and the docking connector assembly are engaged with each other, the vehicle 104 is supported in a substantially stable manner via the corresponding vehicle-docking station 120. In the embodiment shown, the vehicle 104 is an electric vehicle, for instance an electrically assisted bicycle, but it could consist in an electric scooter, a motor bike or any other electric vehicle.

In the embodiment shown, as best shown in Fig. 1, the electric vehicle 104 comprises a front fork 110, a front wheel 112 and a handlebar 114. More specifically, the front fork 110 comprises a first lower end 116 having the front wheel 112 rotatably mounted thereto and a second opposed upper end 118 whereto the handlebar 114 is fixedly mounted. The skilled addressee will appreciate that, in such an embodiment, the handlebar 114 may be used to pivot the front wheel 112. In the embodiment shown, the vehicle connector assembly 300 is mounted to or formed integral with the front fork 110 of the vehicle 104 (for instance the upper end 118 thereof) and it could be arranged anywhere else. This configuration is of great advantage since it facilitates the engagement of the vehicle 104 with the vehicle rack system 100 (i.e. the engagement with one of the vehicle-docking stations 120). In the embodiment shown, the vehicle-docking station 120 of the vehicle rack system 100 comprises a substantially vertical hollow elongated docking frame 121 having a first lower end 122 fixedly attached to a station-receiving base 124 and an opposed upper end 126 comprising in the embodiment shown a docking connector-fixing recess 128. In the embodiment shown, the docking connector assembly 200 is arranged in the docking connector-fixing recess 128 using fixing means (not shown) such as bolts and screws or any other adapted mechanical fasteners. The skilled addressee will appreciate that any other fixing means adapted to secure the docking connector assembly 200 to the vehicle-docking station 120 and any other location of the docking connector assembly 200 may be considered.

The station-receiving base 124 comprises a structure adapted for mounting one or more vehicle-docking stations 120 thereto. The station-receiving base 124 can have a substantially horizontal ground surface such as a parking lot, a sidewalk, a portion of a street or the like. The docking connector assembly 200 can be vertically positioned at a level substantially corresponding to a level of the vehicle connector assembly 300 when the front wheel 112 of the electric vehicle 104 is lying on the base 124. This configuration helps the user of the electric vehicle 104 to guide the vehicle connector assembly 300 towards the docking connector assembly 200 without having to lift the vehicle 104, which is of great advantage. The vehicle rack system 100 can be part of a vehicle rental station, the vehicle rental station being part of a vehicle rental system.

The docking connector assembly 200 and the hollow elongated docking frame 121 may form an integral structure. As best shown in Fig. 1, the vehicle-docking station 120 further comprises a substantially vertical wheel-receiving slot 131 formed in the hollow elongated docking frame 121, the wheel-receiving slot 131 being adapted to at least partially receive therein the front wheel 112 of the electric vehicle 104. The hollow elongated docking frame 121 can further comprise a pair of wheel-guiding members 130, 132 both extending vertically between the lower end 122 and the opposed upper end 126 of the vehicle-docking station 120, the wheel-guiding members 130, 132 being positioned on both sides of the wheel-receiving slot 131, as best shown in Fig. 2. It is appreciated that the shape and the configuration of the vehicle-docking station 120 can vary from the embodiment shown.

The wheel-guiding members 130, 132 enable the guiding of the vehicle wheel 112 forwardly (see arrow F in Fig. 1) when the vehicle 104 is at least partially inserted into the wheel-receiving slot 131. It will be appreciated that the wheel-guiding members 130, 132 and the wheel-receiving slot 131 may contribute to the alignment of the docking connector assembly 200 and the vehicle connector assembly 300 of the locking and battery-charging system 10. The skilled addressee will appreciate that various other configurations may be considered for the vehicle rack system 100 and the vehicle-docking station 120 thereof as well as for the vehicles 104.

Referring now to Fig. 2, therein illustrated is a perspective view of the vehicle rack system 100 that is operable for charging (i.e. electrically charging a battery of) one or more electric vehicles 104. It will be understood that one or more locking and battery-charging systems 10 described herein are at least partially installed (the docking connector assembly thereof, in the embodiment shown) within the vehicle rack system 100 by being mounted to or formed integral with the charging-enabled vehicle-docking stations 120 and provide an electrical interface between the electric vehicles 104 and the vehicle rack system 100. In the illustrated example, the vehicles 104 are each secured to one of the charging-enabled vehicle-docking stations 120. The vehicles 104 can be charged by one of the vehicle-docking stations 120. The vehicle could also be a non-electric vehicle and could be secured (i.e. mechanically coupled) but not charged (i.e. electrically coupled) when docked to one of the vehicle-docking stations 120. The vehicle rack system 100 includes a power box that includes components for providing a power source (for instance an external power source) that is used to recharge the electric vehicles 104. The power box may include the connection to mains power or mains electricity (ex: 110V, 240V, 480V), voltage control supplies, one or more higher-voltage converters and backup voltage converters. The vehicle rack system 100 further includes a main kiosk 102. The power box may be housed within the main kiosk 102. The main kiosk 102 may include electronic systems that are operable to monitor and control charging provided to one or more electric vehicles docked to the vehicle rack system 100. For example, the electronic systems can be configured to adjust charging amongst a plurality of docked vehicles based on the charge levels of the vehicles and the total load. Cabling for providing current for charging the vehicles, for data communication and for providing power to electronics of the docking connector assembly 300 at one or more of the vehicle-docking stations 120 is also included.

In one embodiment, each vehicle-docking station 120 includes a floating, non-isolated DC-DC converter (for instance in the range of 100 W to 500 W, in another example in the range of 300 W to 500 W) supplying regulated current to recharge the vehicle battery from the voltage bus (for instance a bus having a voltage smaller than 60 V, for instance a 58Vdc bus, for instance from the above-mentioned external power source electrically connected to the vehicle rack system 100 via the main kiosk 102 thereof). The electric vehicle 104 may include battery internal circuits and, as detailed below, charging current is not fed to the battery unless the vehicle-docking station 120 recognizes the vehicle as being an electric vehicle and the information from the vehicle confirm that the battery needs to be charged (i.e. vehicle information correspond to predetermined vehicle charging conditions, said predetermined vehicle charging conditions being set for instance and without being limitative by the vehicle docking station and/or by the electric vehicle).

In the present disclosure, the expression "vehicle information" should not be understood as being limited to information provided by the vehicle battery but could also comprise any information provided by any other component of the electric vehicle and/or the vehicle docking station which might be relevant for instance for the charging of the vehicle battery. Moreover, as detailed below, the vehicle information sent by the vehicle connector assembly 300 to the docking connector assembly 200 (i.e. transferred from the vehicle to the vehicle docking station) are not necessarily limited to vehicle charging purposes but can also be used for instance for maintenance and/or vehicle flow management purposes.

### Battery-charging system

In the embodiment shown, as represented for instance in Fig. 2, as detailed below, the locking and battery-charging system 10 is configurable into a charging configuration wherein a charging current is provided to a battery of the electric vehicle 104 based on the vehicle information thereof, so as to enable charging of the battery of the electric vehicle 104. As detailed below, the locking and battery-charging system 10 is configurable into the charging configuration only when the docking and vehicle connector assemblies 200, 300 are configured together into the secured and locked configuration. An example of a possible mechanical connection between the docking and vehicle connector assemblies 200, 300 is described in WO 2019/010582, the content of which is hereby incorporated by reference in its entirety.

### Docking connector assembly

As mentioned above, the docking connector assembly 200 is mountable to or formed integral with the vehicle-docking station 120 comprising (or electrically coupled to) the power source (for instance the vehicle-docking station 10 being electrically connected to the power source - for instance the external power source - via the main kiosk 102 of the vehicle rack system 100). In other words, the docking connector assembly 200 forms at least partially a vehicle-charging module operable to receive electrical power, for instance from the external power source.

The docking connector assembly 200 (or female connector assembly 200 in the embodiment shown) comprises a docking communication and control system (or docking communication system). In the embodiment shown, the docking communication system of the docking connector assembly 200 is proximate a mechanical connection portion of the docking connector assembly which is shaped and dimensioned to mechanically couple the docking and vehicle connector assemblies. It could also be conceived a docking connector assembly wherein the mechanical connection portion and the docking communication system would be spaced apart from each other and arranged at two distinct locations of the vehicle docking station.

The docking connector assembly 200 also comprises docking current coupling elements which are electrically coupled (or electrically connected) via electrical connectors to the source of electrical power (for instance to the external power source, for instance via the main kiosk 102). The power source may include one or more high-power converters (ex: 3kVA, 58V output) and backup converters (ex: 24V dc), that convert AC mains power to DC current that is effective for charging one or more electric vehicles. The docking connector assembly 200 also comprises a proximity detector configured to detect when an electric vehicle is in the vicinity of the vehicle-docking station 120 to which the docking connector assembly 200 is mounted. In the present embodiment, the proximity detector comprises a reed switch activatable by a magnetic element of the vehicle connector assembly 300, although it is appreciated that other configurations of proximity detectors are also possible. The docking communication and control system (or docking communication system) of the docking connector assembly 200 comprises a dock communication interface configured to communicate with a corresponding connector assembly communication interface provided on the vehicle connector assembly 300. As can be appreciated, any suitable dock communication interface can be provided for allowing exchanging data between the docking connector assembly 200 and the vehicle connector assembly 300. For example, the dock communication interface can comprise a Radio Frequency Identification (RFID) interface (ex: RFID antenna, RFID transceiver and/or RFID memory) configured to exchange data wirelessly with a corresponding RFID interface provided in the connector assembly communication interface. It is appreciated, however, that other wired or wireless communication interfaces are also possible. The dock communication interface and the connector assembly communication interface can be configured to communicate using a predetermined communication protocol, which can be referred to as a dock-connector communication protocol.

The dock communication interface can be configured to receive vehicle information relating to a vehicle 104 when the vehicle connector assembly 300 associated with said vehicle 104 and the docking connector assembly 200 are in the secured and locked configuration (i.e. when the vehicle connector assembly 300 and the docking connector assembly 200 are secured and locked to each other), or when the vehicle 104 is in the vicinity of the docking connector assembly 200. Such vehicle information can include, for example, an identifier uniquely identifying the vehicle or a type of the vehicle, information relating to the battery of the vehicle, such as information indicating charging conditions of the battery, etc. For example, the docking connector assembly 200 can be configured to read vehicle information from a computer-readable medium associated with the vehicle 104, such as a memory provided in the vehicle connector assembly 300. In some embodiments, the computer-readable medium can comprise an identification tag, such as an RFID tag.

As detailed below, the docking communication and control system of the docking connector assembly 200 for a given vehicle-docking station 120 is operable to determine for instance the type of vehicle (electric or non-electric) that is received within the vehicle-docking station 120 or that is approaching it. For instance, the docking communication and control system of the docking connector assembly 200 can include a sensor for reading the identification tag of the vehicle 104 engaged with the vehicle-docking station 120 or in the vicinity thereof. The identification tag indicates for instance the type of the vehicle. The identification tag can be part of the connector communication interface that may be provided within the vehicle connector assembly 300 and the sensor of the docking connector assembly 200 can read the identification tag upon a portion of the male connector assembly 300 (or vehicle connector assembly 300) being received within a recess (or vehicle-receiving recess) of the female connector assembly 200 (or docking connector assembly 200) or upon the docking connector assembly and the vehicle connector assembly being at a distance from each other smaller than a predetermined detection distance. For example, the identification tag can be an active or a passive RFID tag comprising an RFID antenna, RFID transceiver and/or RFID memory.

As detailed below, the docking communication and control system - or docking communication and charging controller system or docking communication system - of the docking connector assembly 200 is configured to transmit control signals to enable charging of the battery of the electric vehicle 104 through the docking current coupling elements only when one or more vehicle charging conditions are met; for instance, the charging of the battery is enabled only when the docking current coupling elements of the docking connector assembly 200 are properly interfaced (i.e. electrically connected) with a battery charging interface 320 of the vehicle connector assembly 300, when the identification tag of the vehicle indicates that the vehicle is an electric vehicle and/or an electric vehicle allowed to be connected to the vehicle docking station and/or when, as detailed below, the vehicle information correspond to the above-mentioned predetermined vehicle charging conditions.

As detailed below, the docking communication and control system is also for controlling the charging of the vehicle. The docking communication and control system can be configured to receive one or more data signals to monitor a charging status of the vehicle, and to transmit control signals for controlling whether a current flows or does not flow from the power source to the docking current coupling elements of the docking connector assembly 200 to further charge the electric vehicle. The docking communication and control system of the docking connector assembly 200 may be powered by a low-voltage source (ex: 12V). A flyback converter (ex: 5-8W) may be provided to supply the low-voltage source.

It is appreciated that the shape, the configuration, and the location of the docking connector assembly 200 and the components thereof can vary from the embodiment shown.

### Vehicle connector assembly

As mentioned above, the vehicle connector assembly 300 is mountable to or formed integral with a vehicle comprising a battery. The vehicle connector assembly 300 comprises the above-mentioned battery-charging interface 320 which is electrically coupled with the battery of the electric vehicle and connectable (i.e. electrically couplable) to a power source, for instance to the above-mentioned external power source electrically coupled to the vehicle rack system 100, via the docking current coupling elements of the docking connector assembly 200 to charge the battery of the vehicle 104. The vehicle connector assembly 300 also comprises a vehicle communication system 310 to receive the vehicle information from the vehicle (for instance the vehicle information comprises battery information from the vehicle battery) and send the vehicle information to the docking connector assembly 200 (for instance via the docking communication system (or docking communication and control system) thereof).

It is appreciated that the shape, the configuration, and the location of the vehicle connector assembly 300 and the components thereof can vary from the embodiment shown.

For instance, in the embodiment shown, the vehicle communication system 310 is close to a mechanical connection portion of the vehicle connector assembly that is shaped and dimensioned to be mechanically coupled with the mechanical connection portion of the docking connector assembly to configure the docking and vehicle connector assemblies into the locked configuration (for instance, the vehicle communication system is embedded into a cover, for instance a top cover, covering at least partially the mechanical connection portion of the vehicle connector assembly). It could also be conceived a vehicle connector assembly wherein the mechanical connection portion and the vehicle communication system would be spaced apart from each other and arranged at two distinct locations of the vehicle.

### Battery and battery-charging interface

The battery-charging interface 320 comprises battery-charging contacts connectable to - or engageable with or electrically couplable with - the docking current coupling elements of the docking connector assembly 200 when the vehicle connector assembly 300 and the docking connector assembly 200 are in the secured and locked configuration so as to electrically connect the battery and the power source of (or electrically coupled to) the vehicle-docking station 120. In some embodiments, the battery-charging interface 320 can comprise a unidirectional current-conducting member 322 (for instance an ideal diode circuitry) forming a battery power feedback protection to prevent access of battery voltage and power on the vehicle connector assembly 300 when the vehicle is undocked from the vehicle-docking station 120.

It is appreciated that the shape, the configuration, and the location of the battery-charging interface can vary from the embodiment shown.

### Vehicle communication system

The vehicle communication system 310 comprises a vehicle communication interface 312 for communicating with the vehicle 104, and more specifically with one or more controllers and/or systems/subsystems onboard the vehicle 104 such as a battery management system of the electric vehicle. As can be appreciated, any suitable vehicle communication interface 312 can be provided for allowing the exchange of data between the vehicle 104 and the vehicle communication system 310 of the vehicle connector assembly 300. For example, the vehicle communication interface 312 can comprise a wired connection to a data bus associated with the vehicle, thus allowing data to be communicated over a data cable operatively connecting the vehicle communication system 310 to the vehicle 104. It is appreciated, however, that other wired or wireless communication interfaces are also possible.

The vehicle communication interface 312 and the vehicle 104 can be configured to communicate using a predetermined communication protocol, which can be referred to as a connector-vehicle communication protocol. The connector-vehicle protocol can be a protocol that is different than the above-mentioned dock-connector protocol. As can be appreciated, any suitable connector-vehicle protocol can be used to allow communication over the wired or wireless interface between the vehicle communication system 310 and the vehicle 104. Moreover, the vehicle communication system 310 can comprise any suitable hardware to allow communication with the vehicle via the connector-vehicle protocol. For example, the vehicle communication system 310 can comprise a serial transceiver for communicating with a data bus associated with the vehicle 104, such as a Controller Area Network (CAN) bus transceiver for communicating with a CAN bus onboard the vehicle 104, or a Universal Asynchronous Receiver/Transmitter (UART), among others.

The vehicle communication system 310 also comprises the above-mentioned connector assembly communication interface 314 for communicating with the corresponding dock communication interface provided in the docking connector assembly 200. As can be appreciated, any suitable connector assembly communication interface 314 can be provided for allowing exchanging data between the vehicle connector assembly 300 and the docking connector assembly 200. For example, the connector assembly communication interface 314 can comprise an RFID interface (ex: RFID antenna, RFID transceiver and/or RFID memory) configured to exchange data wirelessly with a corresponding RFID interface provided in the dock communication interface. It is appreciated, however, that other wired or wireless communication interfaces are also possible. As mentioned above, the connector assembly communication interface can be configured to communicate with the dock communication interface using the dock-connector communication protocol which is different than the connector-vehicle protocol.

The connector assembly communication interface 314 can be positioned in any suitable location that allows it to interface with the dock communication interface when the vehicle connector assembly 300 and the docking connector assembly 200 are in the secured and locked configuration and/or when the vehicle 104 is in the vicinity of the docking connector assembly 200. For example, in the illustrated embodiment, the connector assembly communication interface 314 and the dock communication interface respectively comprise RFID interfaces. An RFID antenna of the connector assembly communication interface 314 is thus positioned within the connector assembly 300 such that it is adjacent to and/or in close proximity with a corresponding RFID antenna of the dock communication interface in the docking connector assembly 200. In this configuration, the connector assembly communication interface 314 is close to a mechanical connection portion of the vehicle connector assembly that is shaped and dimensioned to be mechanically coupled with the mechanical connection portion of the docking connector assembly to configure the docking and vehicle connector assemblies into the locked configuration (for instance, the vehicle communication system is embedded into a cover, for instance a top cover, covering at least partially the mechanical connection portion of the vehicle connector assembly). It is appreciated that in other embodiments, the vehicle connector assembly can be configured wherein the mechanical connection portion and the vehicle communication system would be spaced apart from each other and arranged at two distinct locations of the vehicle.

The vehicle communication system 310 further comprises a controller 316 (such as a microcontroller or microcontroller unit) operatively coupled to the vehicle communication interface 312 and the connector assembly communication interface 314. The controller 316 can operate the vehicle communication interface 312 to communicate with the vehicle 104 using a first protocol (i.e. the connector-vehicle protocol) and can operate the connector assembly communication interface 314 to communicate with the vehicle-docking station 120 using a second protocol (i.e. the dock-connector protocol) that is different than the first protocol. In some embodiments, the controller 316 can operate the vehicle communication interface 312 to communicate with the vehicle 104 using a first interface type (ex: wired interface) and can operate the connector assembly communication interface 314 to communicate with the vehicle-docking station 120 using a second interface type (ex: wireless interface).

The controller 316 can be operated to relay data between electric vehicle 104 and the vehicle-docking station 120, and thus act as a communication bridge between the electric vehicle 104 (for instance the battery thereof) and the vehicle-docking station 120 (the docking connector assembly 200 thereof, in the embodiment shown). As can be appreciated, due to the different first and second communication protocols, communication messages to and from the electric vehicle 104 can be in a format that is different or incompatible with communication messages to and from the docking station 120. Accordingly, the controller 316 can be configured to convert a first protocol associated with the vehicle 104 (i.e., the connector-vehicle protocol) into a second protocol associated with the docking station 120 (i.e., the dock-connector protocol) and vice-versa, to allow for the transmission of data between the electric vehicle 104 and the docking station 120.

In some configurations, the controller 316 can be operated to relay vehicle data from the vehicle 104 to the docking station 120 in response to a request for such vehicle data from the docking connector assembly 200 (for instance via the docking communication system (or docking communication and control system) thereof). The vehicle data transmitted to the docking connector assembly 200 via the vehicle communication system 310 can include, for example, battery status data comprising at least one of: a battery actual voltage, a battery actual state of charge, a battery actual temperature, a battery end of charge voltage setpoint, a battery charge current setpoint and a battery fault status. It can also comprise information regarding other components of the vehicle and/or performance statuses of the vehicle and/or information regarding the use of the vehicle.

As an example, the controller 316 can be operated to relay data from a battery management system of the vehicle 104 to the docking connector assembly 200 to initiate and/or monitor the charging status of the vehicle's battery. The controller 316 can be configured to receive, via a first protocol (i.e. the dock-connector protocol), a first request for specified data from the vehicle 104 (such as one or more battery status data). The request can be received from the docking station 120 via the connector assembly communication interface 314. Upon receipt of such request, the controller 316 can be configured to send, via a second protocol (i.e. the connector-vehicle protocol) a second request for the specified data from the vehicle 104. The request can be sent over a data bus associated with the vehicle 104 via the vehicle communication interface 312. Following the second request, the controller 316 will receive, via the second protocol, the requested data (for example from the vehicle's battery management system). The data is received via the vehicle communication interface 312. Upon receiving the data, the controller 316 can then send, via the first protocol, the received data. The data can be sent to the docking station 120 via the connector assembly communication interface 314.

In some embodiments, the controller 316 can be configured to expose to the docking station 120 only a subset of vehicle data that can be read from the vehicle 104, and/or to provide vehicle data in a format that is expected by the docking station 120. For example, the connector-vehicle protocol can allow granular access, via vehicle communication interface 312, to detailed vehicle data such as detailed battery information, detailed maintenance information, detailed usage information, etc. However, the controller 316 can be configured to only allow battery information (or another subset of available data, such as battery information and limited maintenance information, or a minimum subset of data required to respect requirements of dock-connector protocol) to be translated and provided to the docking station 120 via the dock-connector protocol. As another example, the docking station 120 can expect to receive vehicle data in a particular format (for example as defined in the dock-connector protocol). Such format may not correspond to the format in which vehicle data is communicated from the vehicle 104 to the communication system 310 (for example as defined in the connector-vehicle protocol). Accordingly, the controller 316 can format and/or translate data received from the vehicle 104 via the connector-vehicle protocol before sending such data to the docking station 120 via the dock-connector protocol. In this fashion, the controller 316 can act to isolate or dissociate the connector assembly communication interface 314 and the dock-connector protocol from the vehicle communication interface 312 and the connector-vehicle protocol. This isolation can allow the capacity of both the docking communication system and the vehicle communication system 310 to evolve independently while avoiding compatibility issues. Moreover, connector-vehicle protocol can be adapted to different vehicle-established protocols (i.e. different connector-vehicle protocols for different types of vehicles used in a vehicle sharing system), while the dock-connector protocol can be standardized across all different types of vehicles used in a vehicle sharing system, thus avoiding compatibility issues between docking station 120 and the different types of vehicles that can be used in the vehicle sharing system.

It is understood that docking and vehicle connector assemblies of a locking system could be conceived that would not be limited to exchanging battery information (for instance to control a charging of the battery of the vehicle), but could also be configured to act together as a communication bridge between the electric vehicle (any component thereof) and the vehicle-docking station (the docking connector assembly thereof, in the embodiment shown) (for instance to allow a technical diagnosis with regard to the corresponding component of the vehicle and/or to manage a vehicle flow, in the context of a vehicle rental system). For example, the controller 316 can be operated in a similar fashion as described above to communicate with management systems of other components of the vehicle 104 and/or a vehicle performance management system thereof, and relay data relating thereto to and from the vehicle-docking station 120 and/or the vehicle 104.

As can be appreciated, the vehicle communication system 310 can be powered in any suitable manner. In the present embodiment, the vehicle connector assembly 300 comprises, a DC-DC converter 318 (for instance a battery converter, for instance from a voltage ranging from about 25V to about 59V to a voltage of about 5V) to power the vehicle communication system 310 from the vehicle battery.

It is appreciated that the shape, the configuration, and the location of the vehicle communication system and the different components thereof can vary from the embodiment shown.

### General principles of the locking and battery-charging system

It is thus understood that the vehicle communication system 310 of the vehicle connector assembly 300 is mounted to or embedded into or formed at least partially integral with the electric vehicle 104 to at least partially form an interface with the vehicle docking station, for instance to provide a standard interface to charge the vehicle 104 when the vehicle 104 is docked to one of the vehicle-docking stations 120 with the docking and vehicle connector assemblies being in the locked configuration.

Moreover, as detailed above, the embedded logic of the vehicle communication system 310 comprising the battery communication receiver 312 having for instance a Controller Area Network (CAN) bus transceiver or a Universal Asynchronous Receiver/Transmitter (UART) or any other suitable communication link and/or protocol, thus allows dissociating the vehicle information communication interface, comprising for instance the battery management system, from the docking communication system of the docking connector assembly 200 configured for instance to identify the type of vehicle. The requested information (i.e. the vehicle information comprising for instance the battery information) needed for charging the battery of the vehicle 104 is transmitted (i.e., communicated, i.e., sent, i.e., transferred) from the vehicle side (at least partially formed by the vehicle connector assembly) to the docking station side (at least partially formed by the docking communication system of the docking connector assembly). Other information regarding the vehicle and the components and the use thereof could also be transmitted from the vehicle side to the docking station side. The locking and battery-charging system 10 thus enables the vehicle information communication interface (comprising for instance the battery management system) and the docking communication system to evolve independently without compatibility issues, the vehicle communication system of the vehicle connector assembly acting as a communication bridge between the vehicle information communication interface and the docking communication system.

The locking and battery-charging system 10 in accordance with the present disclosure thus limits the risks of incompatibilities between the electric vehicle 104 and the vehicle-docking station 120. The vehicle connector assembly 300 is thus adaptable to different types of vehicles which could have different communication protocols. In other words, the vehicle connector assembly 300 is configured to by-pass the vehicle information communication interface of the electric vehicle. In other words, the vehicle connector assembly 300 is configured to act as a translating system to render communication provided by the vehicle information communication interface readable or understandable by the vehicle-docking station. It is also understood that when the docking station is configured to receive different types of vehicles, with the vehicles having different communication protocols, the vehicle connector assembly can be adapted to the different vehicle communication protocols without any incompatibility issues with the communication protocol of the docking station (for instance the docking station RFID communication protocol).

In yet other words, the locking and battery-charging system 10 forms a vehicle battery-charging interface and a vehicle-information communication interface.

### Method for charging an electric vehicle

According to another aspect of the disclosure, there is provided a method 400 for securing and charging an electric vehicle 104 comprising a battery and a vehicle connector assembly comprising a battery-charging interface 320 electrically coupled to the battery and a vehicle communication system to receive vehicle information from the battery. In other words, the method is for charging the electric vehicle secured to a vehicle-docking station. The method 400 according to embodiments of the present disclosure may be carried out with a locking and battery-charging system 10 such as the one described above.

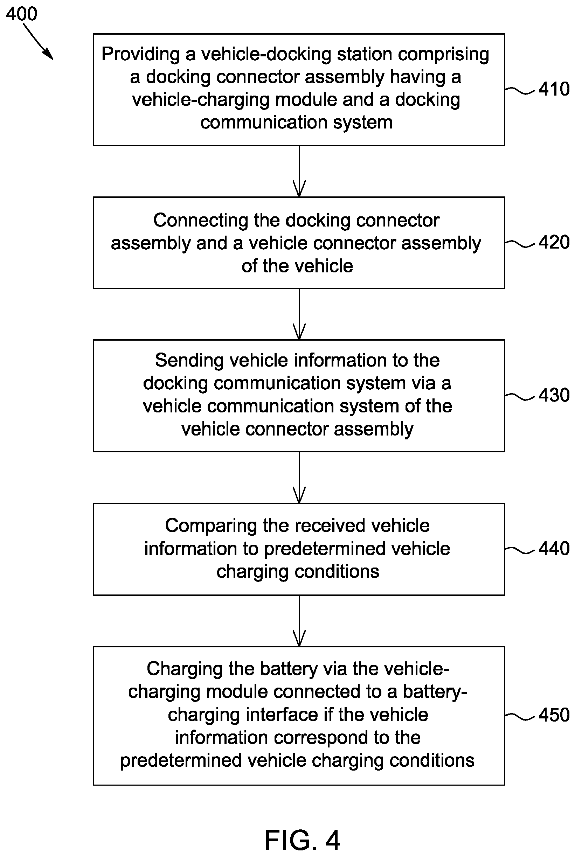

For instance, as represented in Fig. 4, the method 400 comprises a step 410 of providing a vehicle-docking station 120 comprising a docking connector assembly 200 having a vehicle-charging module operable to receive electrical power from a power source, for instance from an external power source, and a docking communication system. The method 400 further comprises a step 420 of connecting the docking connector assembly 200 and the vehicle connector assembly 300 (i.e. configuring the docking connector assembly 200 and the vehicle connector assembly 300 in a locked configuration), a step 430 of sending the vehicle information to the docking communication system (or docking communication and control system) via the vehicle communication system using a connector-vehicle communication protocol to receive the vehicle information from the vehicle component management system and via the docking communication system using a dock-connector communication protocol to receive the vehicle information from the vehicle communication system, the dock-connector communication protocol being different from the connector-vehicle communication protocol. The method further comprises a step 440 of comparing the vehicle information to predetermined vehicle charging conditions via a charging controller of the docking connector assembly (for instance predetermined battery charging conditions corresponding to a safe charging of the battery).

If the vehicle information correspond to the predetermined vehicle charging conditions (for instance to the predetermined battery conditions ensuring to safely charge the battery), the method 400 further comprises a step 450 of electrically coupling the vehicle-charging module of the docking connector assembly with the battery-charging interface of the vehicle connector assembly to charge the battery via the vehicle-charging module electrically connected to the battery-charging interface. It is understood that charging parameters used to charge the battery via the vehicle-charging module electrically connected to the battery-charging interface when the vehicle information correspond to the predetermined vehicle charging conditions can be adapted (i.e. adjusted, i.e. modified) based on the vehicle information. For instance, the charging parameters can be adjusted for instance based on a battery type, a vehicle type, a battery actual voltage, a battery actual state of charge, a battery actual temperature, a battery end of charge voltage setpoint, a battery charge current setpoint and the like.

In the embodiment shown, the connecting step 420 comprises a step of detecting a vehicle presence, for instance through a reed switch of the docking connector assembly 200 activated by a magnet of the vehicle connector assembly. For instance, the step of detecting the vehicle presence comprises a step of requesting vehicle identification information (for instance a vehicle ID), for instance through RFID communication. In the embodiment shown, the step 430 of sending the battery information to the docking communication system via the vehicle communication system also comprises sending the vehicle identification information through RFID communication. In the embodiment shown, the method 400 also comprises a step of controlling the vehicle identification information provided by the electric vehicle. For instance, on the basis of the received vehicle identification information, the method might comprise a step of validating that the docked vehicle is an electric vehicle, is a vehicle allowed by the vehicle rack system and/or and the vehicle needs charging.

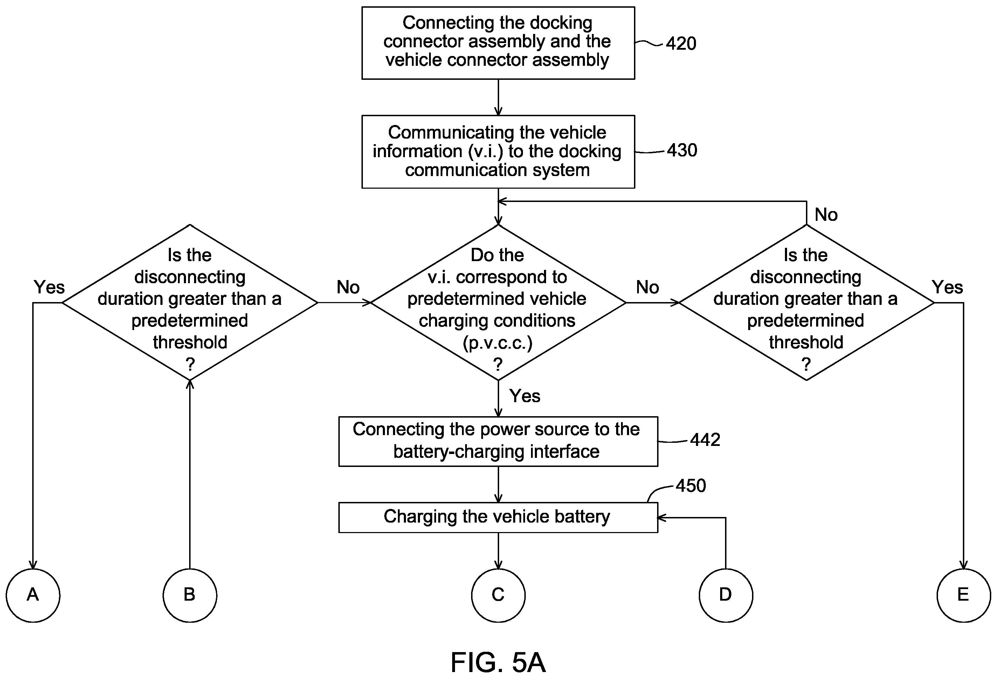

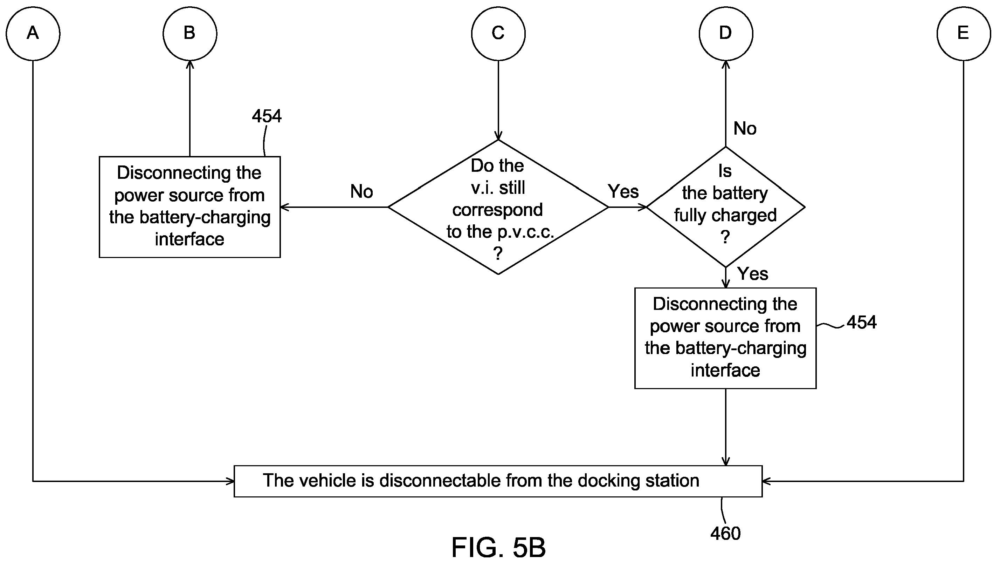

The step 440 of comparing the vehicle information to the predetermined vehicle charging conditions might comprise, for instance, validating that a battery temperature is below a predetermined temperature limit to ensure a safe battery charging. For instance, the step 440 of comparing the vehicle information to the predetermined vehicle charging conditions might also comprise comparing at least one of a battery actual voltage and a battery actual state of charge to predetermined voltage and state of charge conditions. The method further comprises, as represented in Fig. 5A, a step 442 of connecting the power source to the battery-charging interface of the vehicle connector assembly, for instance when the vehicle information correspond to the predetermined vehicle charging conditions. In the embodiment shown, and as best represented in Figs. 5A and 5B, the step 450 of charging the battery via the vehicle-charging module connected to the battery-charging interface comprises a charge initiation phase, a charge-monitoring phase and a charge termination phase.

### Charge initiation phase

If the vehicle information corresponds to the predetermined vehicle charging conditions, the method comprise the above-mentioned step 442 wherein the power source is electrically connected (or electrically coupled) to the battery-charging interface 320 of the vehicle connector assembly 300, via the vehicle-charging module of the vehicle-docking station 120. For instance, the power source is electrically connected to the vehicle battery via connecting a charger of the vehicle connector assembly 300 to a ball plunger mechanism of the docking connector assembly 200, for instance through a relay activation. In the embodiment shown, the charge initiation phase also comprises starting the charger of the vehicle connector assembly with a current setpoint and/or a voltage setpoint of the vehicle information transmitted to the docking connector assembly by the vehicle communication system 310.

### Charge-monitoring phase

In the embodiment show, during the step 450 of charging the battery via the vehicle-charging module connected to the battery-charging interface, the vehicle information is continuously reported from the vehicle to the vehicle-docking station via the vehicle communication system 310 of the vehicle connector assembly. For instance, at intervals having a predetermined duration, the vehicle information is reported from the vehicle to the vehicle-docking station via the vehicle communication system 310 of the vehicle connector assembly. If during the step 450 of charging the battery, the reported vehicle information reveals that at least one of the predetermined vehicle charging conditions is not met anymore, the charging will stop (for instance the method will comprises a step 454 wherein the charger of the vehicle connector assembly 300 is disconnected from the docking connector assembly 200, for instance disconnected from a ball plunger mechanism thereof).

During the charge-monitoring phase, the vehicle information is requested, for instance at regular intervals, to control whether all the predetermined vehicle charging conditions are met again. If the predetermined vehicle charging conditions are met again, the power source will be connected again to the battery-charging interface of the vehicle connector assembly and the charging of the vehicle battery will be reactivated. For instance, a duration of disconnecting of the power source from the vehicle battery is measured. If the disconnecting duration is smaller than or equal to a predetermined disconnecting duration, the monitoring of the vehicle information is pursued. If the disconnecting duration is greater than the predetermined disconnecting duration, the monitoring of the vehicle information is ended (i.e. the vehicle-docking station stops attempting to charge the electric vehicle).

### Charge termination phase

In the embodiment shown, the step 450 of charging the battery is ended, for instance, by terminating a rental of the vehicle 104, by the battery actual state of charge reaching a predetermined charge target (i.e. by the battery being substantially fully charged) or by a battery fault status (for instance the battery actual temperature exceeding a predetermined temperature limit). When the step 450 of charging the battery is ended, the method further comprises a step 460 wherein the locking and battery-charging system 10 is configured into a disconnectable configuration wherein the docking and vehicle connector assemblies 200, 300 can be unlocked and disconnected from each other. To be configured into the disconnectable configuration, in the embodiment shown, the charger of the vehicle connector assembly 300 is disconnected from the docking connector assembly 200 (for instance disconnected from the ball plunger mechanism thereof).

Several alternative embodiments and examples have been described and illustrated herein. The embodiments of the invention described above are intended to be exemplary only. A person of ordinary skill in the art would appreciate the features of the individual embodiments, and the possible combinations and variations of the components. A person of ordinary skill in the art would further appreciate that any of the embodiments could be provided in any combination with the other embodiments disclosed herein. It is understood that the invention may be embodied in other specific forms without departing from the central characteristics thereof. The present examples and embodiments, therefore, are to be considered in all respects as illustrative and not restrictive, and the invention is not to be limited to the details given herein. Accordingly, while the specific embodiments have been illustrated and described, numerous modifications come to mind. The scope of the invention is therefore intended to be limited by the scope of the appended claims.

## Claims

1. A vehicle (104) comprising:
a battery;
a vehicle component management system; and
a vehicle connector assembly (300) electrically coupled with the vehicle component management system and the battery, the vehicle connector assembly (300) being engageable with a docking connector assembly (200) of a vehicle-docking station (120) electrically coupled with a power source, the vehicle connector assembly (300) comprising:
a battery-charging interface (320) electrically couplable with the power source via the docking connector assembly (200) to charge the battery;
a vehicle communication system (310) to receive vehicle information from the vehicle component management system and send the vehicle information to the docking connector assembly (200), the vehicle communication system (310) comprising:
a vehicle communication interface (312) for communicating with the vehicle component management system using a connector-vehicle communication protocol;
a connector assembly communication interface (314) for communicating with the docking connector assembly (200) using a dock-connector communication protocol that is different from the connector-vehicle communication protocol; and
a controller (316) operatively coupled to the vehicle communication interface (312) and the connector assembly communication interface (314), the controller (316) being configured to covert the connector-vehicle communication protocol into the dock-connector communication protocol and vice-versa, to allow transmission of data between the vehicle (104) and the docking connector assembly (200)
wherein the vehicle connector assembly (300) is formed integral with the vehicle (104), and the vehicle connector assembly (300) and the docking connector assembly (200) are engageable together in a secured and locked configuration.

2. The vehicle (104) of claim 1, wherein the connector assembly communication interface (314) is positioned to interface with a dock communication interface of the docking connector assembly (200) when the vehicle connector assembly (300) and the docking connector assembly (200) are in the secured and locked configuration.

3. The vehicle (104) of claim 1 or 2, wherein a dock communication interface of the docking connector assembly (200) receives the vehicle information from the vehicle communication system (310) when the vehicle connector assembly (300) and the docking connector assembly (200) are in the secured and locked configuration.

4. The vehicle (104) of any one of claims 1 to 3, wherein the connector assembly communication interface (314) comprises an identification tag readable by the docking connector assembly (200), wherein charging of the battery is only enabled by the docking connector assembly (200) when the identification indicates that the vehicle (104) is an electric vehicle and/or an electric vehicle allowed to be connected to the vehicle docking station (120).

5. The vehicle (104) of claim 4, wherein the identification tag is an active or passive Radio Frequency Identification (RFID) tag is positioned within the vehicle connector assembly (300) such that it is adjacent to and/or in close proximity with a corresponding RFID antenna of a dock communication interface in the docking connector assembly (200) when the vehicle connector assembly (300) and the docking connector assembly (200) are in the secured and locked configuration.

6. The vehicle (104) of any one of claims 1 to 5, wherein the vehicle communication system (310) is embedded within a cover that at least partially covers a mechanical connection portion of the vehicle connector assembly (300) that is shaped and dimensioned to be mechanically coupled with a mechanical connection portion of the docking connector assembly (200) to configure the docking and vehicle connector assemblies (200, 300) into the locked configuration.

7. The vehicle (104) of any one of claims 1 to 6, wherein the battery charging interface (320) comprises a unidirectional current-conducting member (322) forming a battery power feedback protection to prevent access of battery voltage and power on the vehicle connector assembly (300) when the electric vehicle (104) is undocked from the vehicle-docking station 120.

8. The vehicle (104) of claim 7, wherein the unidirectional current-conducting member comprises an ideal diode circuitry.

9. The vehicle (104) of any one of claims 1 to 8, further comprising a front fork (110) comprising a first lower end (116) having a front wheel (112) rotatably mounted thereto and a second opposed upper end (118) whereto a handlebar (114) is fixedly mounted, wherein the vehicle connector assembly (300) is mounted to or formed integral with the front fork (110).

10. The vehicle (104) of claim 1, wherein the vehicle connector assembly (300) further comprises a magnet for cooperating with a reed switch of the docking connector assembly (200) to indicate a presence of the vehicle (104) within the vehicle-docking station (120).

11. A method for charging the vehicle (104) of claim 1 engaged with the docking connector assembly (200) of the vehicle-docking station (120), the method comprising:
sending vehicle information to a docking communication and control system of the docking connector assembly (200) via the vehicle communication system;
comparing the vehicle information to predetermined vehicle charging conditions, and electrically connecting the power source to the battery-charging interface (320) of the vehicle connector assembly (300) if the vehicle information corresponds to the predetermined vehicle charging conditions.

12. The method of claim 11, wherein comparing the vehicle information comprises validating that the docked vehicle (104) is an electric vehicle, is a vehicle (104) allowed by the vehicle rack system, and/or and the vehicle (104) needs charging.

13. The method of claim 11 or 12, wherein sending the vehicle information comprises reading, by the docking communication and control system of the docking connector assembly (200), an identification tag of the vehicle (104) received within the vehicle-docking station (120).

14. The method of any one of claims 11 to 13, comprising a step of detecting a vehicle presence by the docking connector assembly (200), prior to sending the vehicle information.

15. The method of claim 14, wherein the vehicle presence is detected through a reed switch of the docking connector assembly (200) activated by a magnet of the vehicle connector assembly (300).
